# EUROPÄISCHE PATENTANMELDUNG

(11) **EP 1 491 799 A1**
(43) Veröffentlichungstag der Anmeldung: **29.12.2004**
(21) Anmeldenummer: 03101855.9
(22) Anmeldetag: 24.06.2003
(51) Int. Cl.: F16H 63/42, B60K 35/00

(54) **Anzeigeeinrichtung**

(71) Anmelder: Ford Global Technologies, LLC, A subsidary of Ford Motor Company, Dearborn, MI 48126 (US)
(72) Erfinder: Stein, Thomas, 56271 Kleinmaischeid (DE)
(74) Vertreter: Drömer, Hans-Carsten, Dr.-Ing.

(57) **Zusammenfassung**

Die Erfindung betrifft eine Anzeigeeinrichtung (1) für Kraftfahrzeuge zur Anzeige von Fahrstufen, Gängen oder Getriebeübersetzungen, die in dem primären Sichtfeld des Fahrers angeordnet ist. Die vorliegende Erfindung zeichnet sich dadurch aus, dass die Anzeigeeinrichtung (1) eine Darstellung der in dem Kraftfahrzeug befindlichen Schaltkulisse (2) der Gangwähleinrichtung zumindest für die Fahrpositionen umfasst, wobei in der Darstellung der Schaltkulisse (2) die in der Schaltkulisse (2) der Gangwahleinrichtung vorliegende Wählhebelposition angezeigt ist. Ferner sind eine variable Textanzeige (8) und eine Multifunktionsanzeige (9) in der Anzeigeeinrichtung (1) vorgesehen.

## Beschreibung

Die Erfindung betrifft eine Anzeigeeinrichtung für Kraftfahrzeuge zur Anzeige von Fahrstufen, Gängen oder Getriebeübersetzungen, die in dem primären Sichtfeld des Fahrzeugführers angeordnet ist.

Manuelle und automatische, auch stufenlose, Getriebe von Kraftfahrzeugen (KFZ) finden beispielsweise in Personenkraftwagen (PKW) und Lastkraftwagen (LKW) vielfach Anwendung und verfügen über eine Schaltkulisse und einen in der Schaltkulisse befindlichen Wählhebel. Der Fahrzeugführer kann durch Betätigung des Wählhebels einzelne oder mehrere zu schaltende Gangstufen vorwählen und/oder einlegen.

Bei automatischen oder halbautomatischen Getrieben können vorgewählte Gangstufen nur dann eingelegt werden, wenn die Drehzahl des KFZ-Motors in einem definierten Drehzahlbereich läuft und/oder sonstige, einen Gangstufenwechsel entgegenstehende Kriterien nicht erfüllt sind. Zwei vorbenannte sonstige Kriterien werden dadurch (nicht) erfüllt, dass ein Schleudersensor (k)einen schleudernden Fahrzustand des KFZ anzeigt und/oder ein Radsensor (k)einen Schlupf an einem Rad feststellt. Daher können vorgewählte und vorliegende, d.h. eingelegte Gangstufen voneinander abweichen.

Die vorgewählte und/oder vorliegende Gangstufe wird über Anzeigenelemente in den Positionen in der Schaltkulisse visuell wahrnehmbar gemacht.

Aus der EP 0 361 011 B1 ist eine Anzeigevorrichtung für ein automatisches Kraftfahrzeuggetriebe bekannt, wobei die vorgewählten Gangstufen dadurch wahrnehmbar gemacht sind, dass die die Wählhebelposition repräsentierenden Anzeigenelemente im zentralen Blickwinkel des Fahrzeugführers skalenartig angeordnet sind und dem Fahrzeugführer den augenblicklichen Zustand des Getriebes anzeigen.

Durch die skalenartige Wiedergabe der vorgewählten Gangstufen wird dem Fahrzeugführer jedoch die vorliegende Position des Wählhebels in der Schaltkulisse nicht angezeigt, so dass der Fahrzeugführer durch die zunächst unverständliche Diskrepanz zwischen der vorliegenden Gangstufe und der durch den Fahrzeugführer subjektiv empfundenen Fehlstellung des Wählhebels seine Aufmerksamkeit beeinträchtigend verwirrt wird.

Der Erfindung liegt daher die Aufgabe zu Grunde, eine Anzeigeeinrichtung zur Anzeige von Fahrstufen, Gängen oder Getriebeübersetzungen bereitzustellen, die die Fahrsicherheit des Fahrzeugs durch den Fahrzeuglenker verbessert.

Die Aufgabe wird durch eine Anzeigeeinrichtung für Kraftfahrzeuge zur Anzeige von Fahrstufen, Gängen oder Getriebeübersetzungen dadurch gelöst, dass die Anzeigeeinrichtung eine Darstellung der in dem Kraftfahrzeug befindlichen Schaltkulisse der Gangwähleinrichtung zumindest für die Fahrpositionen umfasst, wobei in der Darstellung der Schaltkulisse die in der Schaltkulisse der Gangwähleinrichtung vorliegende Wählhebelposition angezeigt ist.

Die Wähleinrichtung der vorliegenden Erfindung hat den Vorteil, dass durch Präzision und Klarheit der Information über die vorliegende Situation der eingelegten Gangstufe und/oder der vorgewählten Gangstufe und des Wählhebels in der Schaltkulisse an den Fahrzeuglenker eine Fehlbedienung durch den Fahrzeugführer vorgebeugt wird und die Aufmerksamkeit des Fahrzeugführers im Wesentlichen unbeei nträchtigt bleibt.

Ferner können voneinander abweichende vorliegende Zustände in der Gangwahl und der Wählhebelposition synchron und eindeutig und klar angezeigt werden.

Vorteilhafte Weiterbildungen ergeben sich aus den Unteransprüchen.

Bei einer vorteilhaften Ausführung der Erfindung kann in der Anzeigeeinrichtung eine variable Textanzeige und eine Multifunktionsanzeige vorgesehen sein, damit dem Fahrzeugführer dieselbe Information und/oder zumindest eine weitere Information in einer zweiten Art der Darstellung, vorzugsweise in alphanumerischer Darstellung, angezeigt wird.

Vorzugsweise wird in der Multifunktionsanzeige das die vorliegende Fahrstufe, Getriebeübersetzung oder den vorliegenden Gangstufe im Automatikmodus oder Man u-ellmodus repräsentierende Zeichen dargestellt. Der Fahrzeugführer wird somit in einer ersten, graphischen und technischen Darstellung und in einer zweiten, alphanumerischen und damit von der ersten verschiedenen Darstellung exakt über die vorliegende Situation der Gangstufen und des Wählhebels in der Schaltkulisse informiert.

Alternativ oder Zusätzlich können eine zunächst dem Fahrzeugführer unverständliche Diskrepanz zwischen der vorliegenden Gangstufe und der durch den Fahrzeuglenker subjektiv empfundenen Fehlstellung des Wählhebels erläuternde Informationen in der Textanzeige und/oder in der Multifunktionsanzeige dargestellt werden. Hierbei können Hinweise einen Gangstufenwechsel entgegenstehende Kriterien, wie beispielsweise ein einen schleudernden Fahrzustand des KFZ feststellender Schleudersensor und/oder ein einen Schlupf an einem Rad feststellender Radsensor, alphanumerisch und/oder graphisch erläutert werden.

Alternativ kann die Multifunktionsanzeige zur Darstellung von Navigationshinweisen ausgebildet sein, ohne darauf beschränkt zu sein. Dem Fahrzeugführer werden so weitere, die Fahrsicherheit verbessernde Informationen direkt in seinem primärem Blickfeld zugeführt. Ferner kann mittels der Multifunktionsanzeige, wie üblich, jegliche andere Information graphisch oder alphanumerisch angezeigt werden.

In einer besonders zweckmäßigen Ausgestaltung der Erfindung ist vorgesehen, dass die in der Multifunktionsanzeige dargestellten Navigationshinweise in Form wenigstens eines gegebenenfalls gewinkelten Navigationspfeils dargestellt sind, wobei die Winkel im 45°-Schritten Werte zwischen 0° und 160° annimmt. Durch diese sinnvolle und schrittweise Unterteilung der möglichen Fahrtrichtungen und der durch einen Navigationspfeil klar angewiesenen Navigationsfahrtrichtung kann der Fahrzeugführer die Navigationshinweise schnell und präzise mit einem Blick erfassen.

Vorteilhafterweise ist die Anzeigeeinrichtung im Instrumentenanzeigefeld angeordnet und daher im primären Blickfeld des Fahrzeugführers, der zur Erfassung der Hinweise seine Aufmerksamkeit nicht von dem Verkehr weglenken muss. Das Instrumentenanzeigefeld ist dadurch gekennzeichnet, dass darin die wichtigsten, für ein sicheres und ordnungsgemäßes Führen des KFZ erforderlichen Instrumente, wie beispielsweise ein Tachometer, ohne auf diesen beschränkt zu sein, angeordnet sind. Beispielsweise kann die Anzeigeeinrichtung in die Windschutzscheibe eingespiegelt oder mit einer anderen Technik in der Windschutzscheibe angezeigt werden. Alternativ kann die Anzeigeeinrichtung auch außerhalb in einem nahen Umfeld des Instrumentenanzeigefeldes angeordnet sein.

Besonders vorteilhaft ist die Anzeigeeinrichtung zwischen zwei Instrumenten, beispielsweise zwischen einem Tachometer und einem Drehzahlmesser, in dem Instrumentenanzeigefeld angeordnet, damit der Fahrzeugführer sämtliche für das Führen des Fahrzeuges erforderlichen Hinweise in einer engen Umgebung wiederfindet. Alternativ kann die Anzeigeeinrichtung auch in einem Instrument angeordnet sein.

Zweckmäßigerweise sind in der Darstellung der Schaltkulisse zumindest zwei parallel zueinander angeordnete vertikale Schaltgassen dargestellt, wobei in ersten Schaltgasse die Fahrstufen eines Automatikmodus und einer zweiten Schaltgasse die Fahrstufen eines Manuellmodus angezeigt sind und in der Darstellung beide Schaltgassen auf Höhe einer E-Position in der ersten Schaltgasse und der Mittelposition in der zweiten Schaltgasse miteinander verbunden sind. Ferner können die Positionen im Automatikmodus die Fahrstufen in den untereinander angeordneten Buchstaben P, R, N, D und die Position im Manuellmodus die Fahrstufen in den untereinander angeordneten Zeichen -, 8, + dargestellt sein, wobei das Zeichen "8" jede einstellige Zahl sein kann. Der Fahrzeuglenker findet so durch die Kombination von graphischen und alphanumerischen Anzeigeelementen eine technisch exakte Wiedergabe der Schaltkulisse und der logischen, die jeweilige Position repräsentierenden Anzeigenelemente in üblicher und gegebenenfalls ihm bekannter Anordnung vor. Alternativ können auch drei oder mehr Schaltgassen vorhanden sein und in der Anzeigeeinrichtung dargestellt sein.

Weiter ist vorgesehen, dass die vorliegende Wählhebelposition dadurch dargestellt wird, dass das die vorliegende Gangstufe repräsentierende Zeichen der Position im Automatikmodus oder Manuellmodus kontrastinvertiert zu den übrigen Zeichen dargestellt ist. Alternativ oder zusätzlich kann das die vorliegende Gangstufe repräsentierende Zeichen auch farbverschieden zu den anderen Zeichen oder auf eine andere Art mit einem Blick für den Fahrzeuglenker erkennbar gekennzeichnet sein.

Die Erfindung wird nachstehend anhand zweier in den Zeichnungen dargestellten Ausführungsbeispielen erläutert werden.

Es zeigen:
- Figur 1: eine Anzeigenvariante einer erfindungsgemäße Anzeigeeinrichtung mit einer variablen Textanzeige und einer Multifunktionsanzeige, wobei die vorgewählte Fahrstufe in der "D"-Position des Automatikmodus befindlich ist,
- Figur 2: eine Skizze einer Schaltkulisse mit Wählhebel in einem KFZ in Draufsicht
- Figur 3: eine weitere Anzeigenvariante der erfindungsgemäßen Anzeigeeinrichtung mit der variablen Textanzeige und der Multifunktionsanzeige, wobei die vorgewählte Position in der ersten Gangstufe "1" des Manuellmodus befindlich ist,
- Figur 4: eine weitere Anzeigenvariante der erfindungsgemäßen Anzeigeeinrichtung mit der variablen Textanzeige und der Multifunktionsanzeige, wobei in der Textanzeige und in der Multifunktionsanzeige Navigationshinweise dargestellt sind,
- Figur 5: eine weitere Anzeigenvariante der erfindungsgemäßen Anzeigeeinrichtung mit der variablen Textanzeige und der Multifunktionsanzeige zwischen zwei Instrumenten in dem Instrumentenanzeigefeld angeordnet,
- Figur 6: eine weitere Anzeigenvariante eines weiteren Ausführungsbeispiel der erfindungsgemäßen Anzeigeeinrichtung mit der variablen Textanzeige und der Multifunktionsanzeige, wobei drei Schaltgassen dargestellt sind.

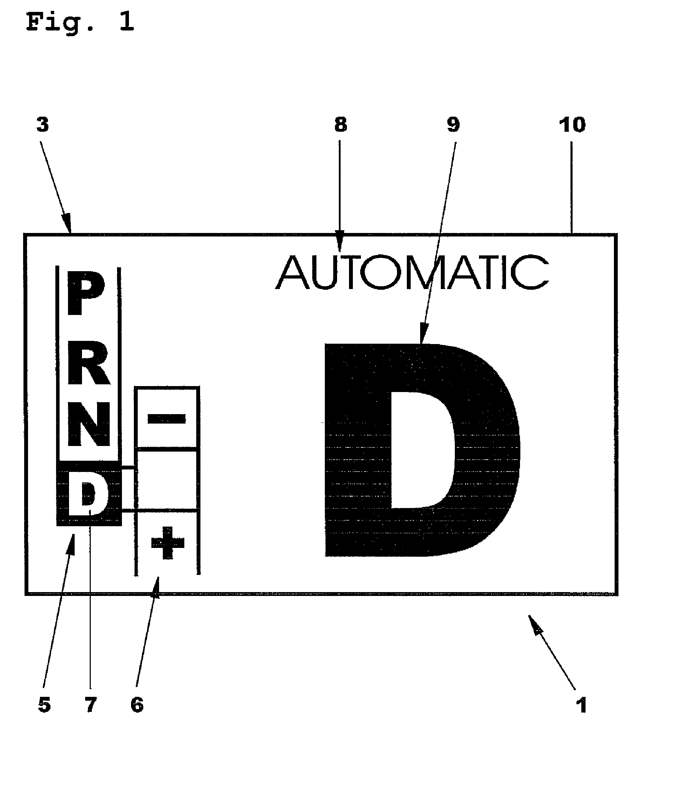

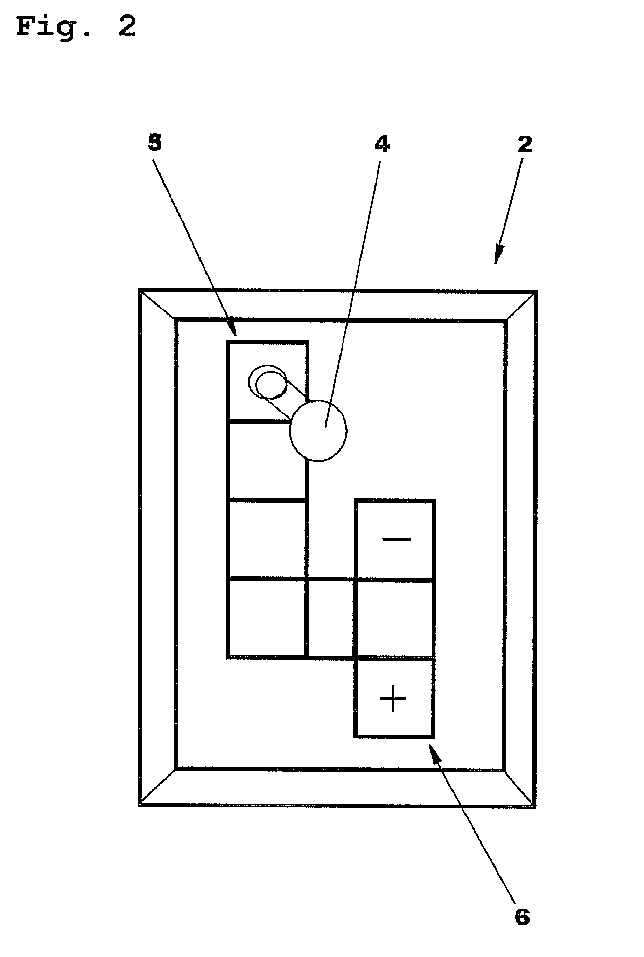

Figur 1 zeigt eine Anzeigeeinrichtung 1 für Kraftfahrzeuge zur Anzeige von Gangstufen, insbesondere von Fahrstufen, Gängen oder Getriebeübersetzungen, wobei die Anzeigeeinrichtung 1 eine Darstellung der in dem Kraftfahrzeug befindlichen Schaltkulisse 2 der Gangwähleinrichtung umfasst (Figur 2), und wobei in der die Schaltkulisse 2 wiedergebenden Wählhebelpositionenanzeige 3 die in der Schaltkulisse 2 der Gangwähleinrichtung vorliegenden Position des Wählhebels 4 angezeigt wird. Die die Schaltkulisse 2 wiedergebenden Wählhebelpositionenanzeige 3 wird in zwei parallel zueinander angeordneten vertikalen Schaltgassen (5, 6) dargestellt, wobei in einer linken Schaltgasse 5 die Fahrstufen eines Automatikmodus und in einer rechten Schaltgasse 6 die Fahrstufen eines Manuellmodus angezeigt werden und in der Darstellung beide Schaltgassen auf Höhe einer "D"-Position in der linken Schaltgasse 5 und der Mittelposition in der rechten Schaltgasse 6 miteinander verbunden sind.

Die Positionen im Automatikmodus stellen die Fahrstufen in den untereinander angeordneten Buchstaben "P", "R", "N", "D" dar. Die Positionen im Manuellmodus stellen die Fahrstufen in den untereinander angeordneten Zeichen "-", "8", "+" dar, wobei das Zeichen "8" jede einstellige Zahl annimmt. Die vorliegende Wählhebelposition wird dadurch kennzeichnend dargestellt, dass die die vorliegende Gangstufe repräsentierende Gangstufenpositionsanzeige 7, genauer hier die "D"-Position im Automatikmodus, "konstrastinvertiert" zu den übrigen Zeichen dargestellt ist.

Ferner ist in der variablen Textanzeige 8 der vorliegende Modus, in Figur 2 der Automatikmodus, durch das Wort "AUTOMATIC" wiedergegeben. Die Multifunktionsanzeige 9 zeigt den Buchstaben "D" als das die vorliegende Gangstufe repräsentierende Zeichen der Position im Automatikmodus in nochmals deutlich hervorgehobener Größe.

Die Anordnung der Informationselemente der Anzeigeeinrichtung ist derartig, dass die graphisch und alphanumerisch kombinierte Wiedergabe der Schaltkulisse 2 mit der Wählhebelpositionenanzeige 3 sich über die gesamte Höhe der Anzeigenoberfläche 10 erstreckt und sich etwa im linken Drittel der Anzeigenoberfläche 10 befindet. Die Textanzeige 8 erstreckt sich etwa in einem oberen Viertel rechts von der Wählhebelpositionenanzeige 3. Die Multifunktionsanzeige 9 ist unterhalb der Textanzeige 8 und rechts von der Wählhebelpositionenanzeige 3 auf der Anzeigeoberfläche 10 angeordnet.

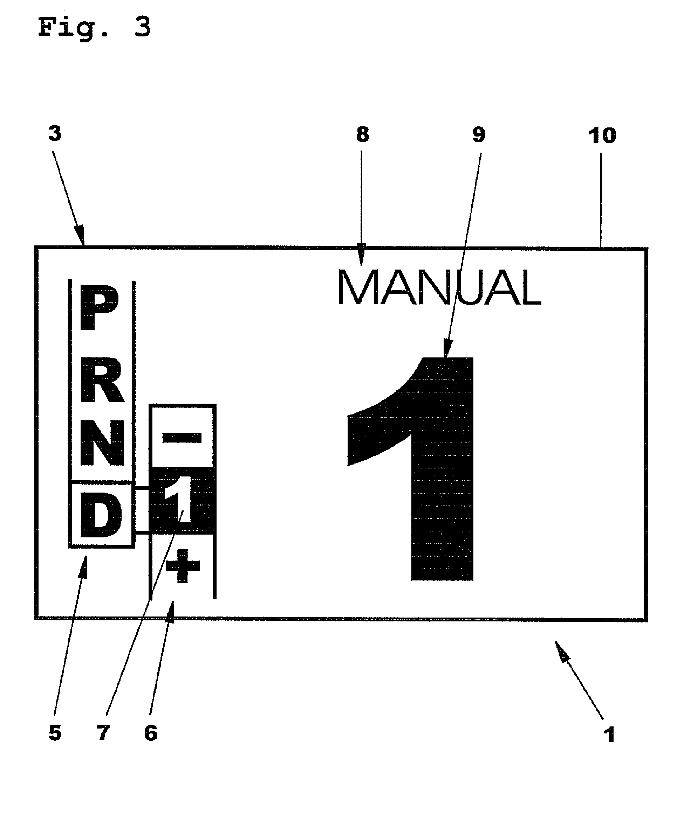

Figur 3 zeigt im Unterschied zu Figur 1 eine kontrastinvertierte Gangstufenpositionsanzeige 7 in der Mittelposition des Manuellmodus in der rechten Schaltgasse 6 der Wählhebelpositionenanzeige 3. Die kontrastinvertierte Zahl "1" repräsentiert die vorliegende Gangstufe des ersten Ganges. Die Anzeige "MANUAL" in der Textanzeige 8 und die Zahl "1" in der Multifunktionsanzeige 9 weisen ebenfalls auf die vorliegende Gangstufe hin.

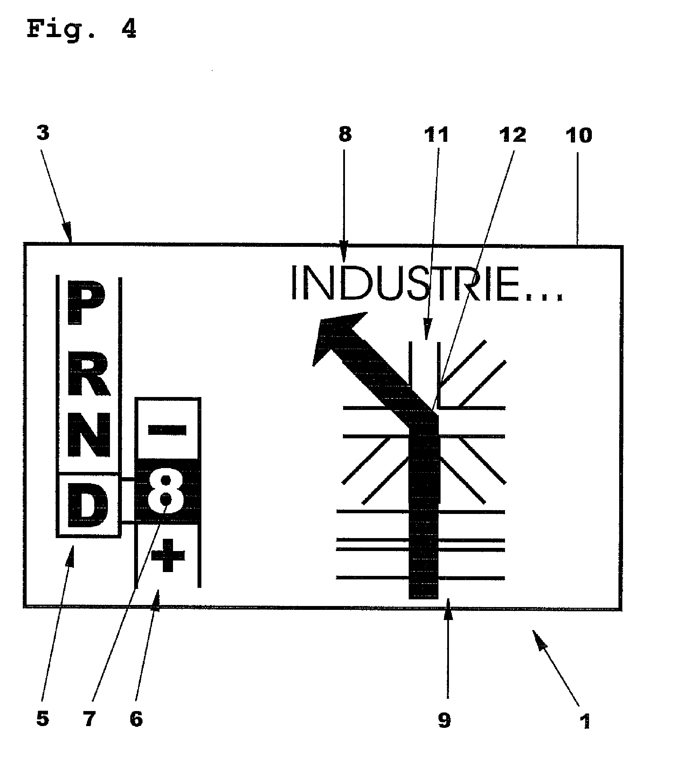

In Figur 4 ist ebenfalls eine erfindungsgemäße Anzeigeeinrichtung 1 mit variablem Textfeld 8 und Multifunktionsanzeige 9 dargestellt, wobei die vorliegende Wählhebelposition repräsentierende Gangstufenpositionsanzeige 7 mittig in der rechten Schaltgasse 6 des Automatikmodus ist und die vorliegende Gangstufe durch eine ein jegliches repräsentierendes Zeichen der Position im Manuellmodus "8" wiedergegeben wird.

In der Textanzeige 8 wird der Hinweis "INDUSTRIE ..." als Navigationshinweis angezeigt. Ein weitere Navigationshinweis in Form eines Fahrtrichtungshinweises wird in der Multifunktionsanzeige 9 angezeigt. In einem achtstrahligen Fahrtrichtungsnavigationsstern 10 , wobei der Winkel der acht Strahlen zueinander Werte in 45°-Schritten zwischen 0° und 360° annimmt, zeigt einen in der 180°-Position beginnenden, im Zentrum des Navigationssterns 11 um 45° gewinkelten und in die 315°-Position weisenden Navigationspfeil 12 als Navigationsrichtungsanzeige.

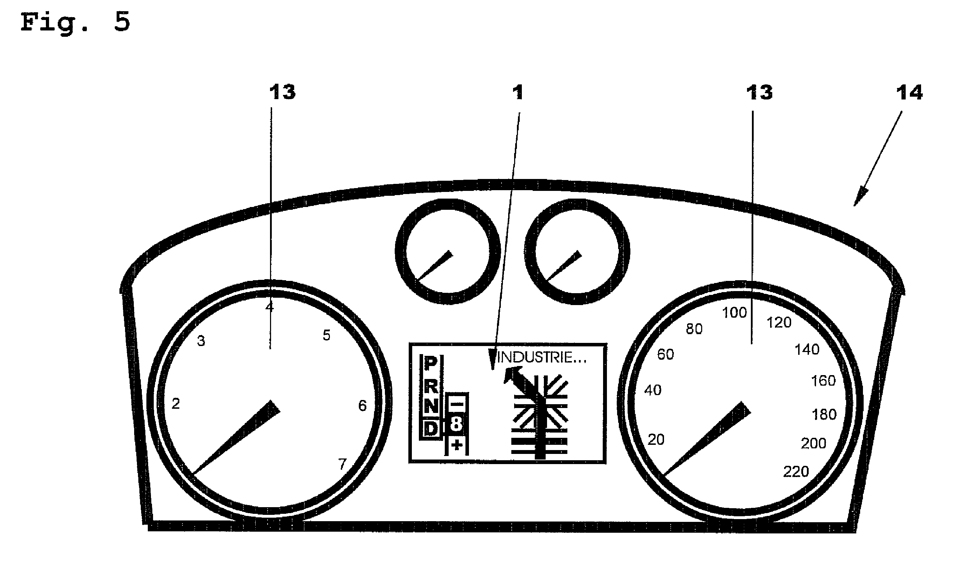

Figur 5 zeigt die erfindungsgemäße Anzeigeeinrichtung 1 mit einer variablen Textanzeige 8 und einer Multifunktionsanzeige 9, die zwischen zwei Rundinstrumenten 13, nämlich einem Tachometer und einem Drehzahlmesser, welche in dem Instrumentenanzeigefeld 14 angeordnet sind.

Zur Abtastung der vorliegenden Wählhebelposition in der Schaltkulisse wird eine Positionsinformation von einem Positionsdetektor zur Erfassung der vorliegenden Wählhebelposition an die Anzeigeeinrichtung 1 übermittelt, die diese Information in der kontrastinvertierten Gangstufenpositionsanzeige 7 darstellt.

Weitere Informationen werden in einem mit der Anzeigeeinrichtung 1 direkt verbu n-denen Steuergerät ausgewertet. Das Steuergerät wird mit fortwährendem Informationsfluss eines Schleudersensors über den Fahrstabilitätszustand des KFZ, von Winkelgeschwindigkeitssensoren über den jeweiligen Schlupf oder das Stillstehen eines jeden Rades, eines Sensor über die aktuelle Fahrgeschwindigkeit de KFZ, zweier Sensoren über die Gaspedalstellung und den in Verbindung mit dem Gaspedal angesteuerten Kick-Down-Schalter und eines Sensor über die KFZ-Motordrehzahl beliefert.

Eine einen sofortigen Schaltvorgang im Getriebe des KFZ verhindernde Information führt zu einer Diskrepanz zwischen der vorliegenden Wählhebelposition und/oder der vorgewählten Gangstufe und der vorliegenden, eingelegten Gangstufe, da der durch den Fahrzeugführer intendierten und möglicherweise unplausiblen Veränderung nicht augenblicklich Folge geleistet wird. Der Istzustand und der Sollzustand werden beide in der Anzeigeeinrichtung 1 dem Fahrzeugführer angezeigt und gegebenenfalls ein weiterer, die Diskrepanz begründender Hinweis, der dem Fahrzeugführer erläuternd die vorliegende Situation zu erkennen hilft.

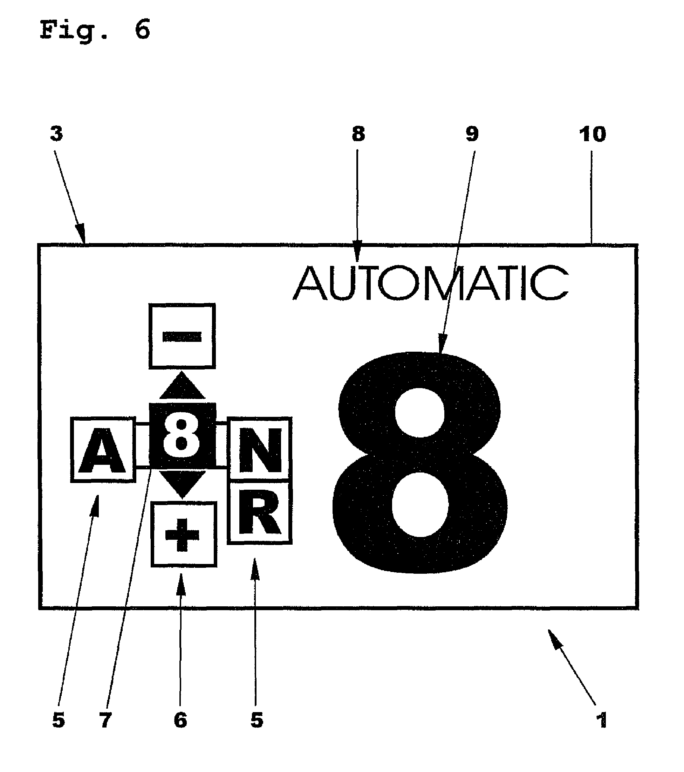

Figur 6 zeigt ein weiteres Ausführungsbeispiel einer Anzeigeeinrichtung 1 für Kraftfahrzeuge zur Anzeige von Gangstufen. Im Unterschied zum ersten Ausführungsbeispiel sind in der Anzeigeeinrichtung in dem zweiten Ausführungsbeispiel drei Schaltgassen die Schaltkulisse repräsentierend dargestellt. Eine erste links angeordnete Schaltgasse für die Automatikposition "A" des Automatikmodus, eine zweite mittlere Schaltgasse für den Manualmodus und eine dritte, rechts angeordnete Schaltgasse für die Leerlaufposition "N" und die Automatikposition "R" des Automatikmodus, wobei in einer mittleren Ebene die erste mit der zweiten und die zweite mit der dritten Schaltgasse in dem Positionen "A", "8", "N" mit "8" entsprechend jeder natürlichen einstelligen Zahl verbunden sind, stellen schematisch die Schaltkulisse dar.

## Patentansprüche

1. Anzeigeeinrichtung (1) für Kraftfahrzeuge zur Anzeige von Fahrstufen, Gängen oder Getriebeübersetzungen, angeordnet in dem primären Sichtfeld des Fahrzeugführers, **dadurch gekennzeichnet, dass** die Anzeigeeinrichtung (1) zumindest teilweise eine schematische Darstellung der in dem Kraftfahrzeug befindlichen Schaltkulisse (2) der Gangwähleinrichtung zumindest für die Fahrpositionen umfasst, wobei in der Darstellung der Schaltkulisse (2) die in der Schaltkulisse (2) der Gangwahleinrichtung vorliegende Wählhebelposition angezeigt ist.

2. Anzeigeeinrichtung (1) nach Anspruch 1, **dadurch gekennzeichnet, dass** eine variable Textanzeige (8) und eine Multifunktionsanzeige (9) vorgesehen ist.

3. Anzeigeeinrichtung (1) nach einem der Ansprüche 1 oder 2, **dadurch gekennzeichnet, dass** in der Multifunktionsanzeige (9) das die vorliegenden Fahrstufe, Getriebeübersetzung oder den vorliegenden Gang repräsentierende Zeichen der Position im Automatikmodus oder Manuellmodus dargestellt wird.

4. Anzeigeeinrichtung (1) nach einem der vorausgehenden Ansprüche, **dadurch gekennzeichnet, dass** die Multifunktionsanzeige (9) zur Darstellung von Navigationshinweisen ausgebildet ist.

5. Anzeigeeinrichtung (1) nach Anspruch 4, **dadurch gekennzeichnet, dass** die in der Multifunktionsanzeige (9) dargestellten Navigationshinweise in Form wenigstens eines gegebenenfalls gewinkelten Navigationspfeils (12) dargestellt sind, wobei der Winkel in 45° Schritten Werte zwischen 0° und 360° annimmt.

6. Anzeigeeinrichtung (1) nach einem der vorausgehenden Ansprüche, **dadurch gekennzeichnet, dass** die Ganganzeigeeinrichtung in einem Instrumentenanzeigefeld angeordnet ist.

7. Anzeigeeinrichtung (1) nach einem der vorausgehenden Ansprüche, **dadurch gekennzeichnet, dass** die Anzeigeeinrichtung (1) zwischen zwei Instrumenten (13) in dem Instrumentenanzeigefeld (14) angeordnet ist.

8. Anzeigeeinrichtung (1) nach einem der vorausgehenden Ansprüche, **dadurch gekennzeichnet, dass** in der Darstellung der Schaltkulisse (3) zumindest zwei parallel zueinander angeordnete vertikale Schaltgassen (5, 6) darstellt sind, wobei in einer ersten Schaltgasse (5) die Fahrstufen eines Automatikmodus und einer zweiten Schaltgasse (6) die Fahrstufen eines Manuellmodus angezeigt sind und in der Darstellung beide Schaltgassen (5, 6) auf Höhe einer D-Position in der ersten Schaltgasse (5) und der Mittelposition in der zweiten Schaltgasse (6) miteinander verbunden sind.

9. Anzeigeeinrichtung (1) nach einem der vorausgehenden Ansprüche, **dadurch gekennzeichnet, dass** die Positionen im Automatikmodus die Fahrstufen in den untereinander angeordneten Buchstaben P, R, N, D und die Positionen im Manuellmodus die Fahrstufen in den untereinander angeordneten Zeichen -, 8, + dargestellt sind, wobei das Zeichen 8 jede einstellige Zahl sein kann.

10. Anzeigeeinrichtung (1) nach einem der vorausgehenden Ansprüche, **dadurch gekennzeichnet, dass** die vorliegende Wählhebelposition dadurch dargestellt ist, dass das die vorliegenden Fahrstufe repräsentierende Zeichen (7) der Position im Automatikmodus oder Manuellmodus kontrastinvertiert zu den übrigen Zeichen dargestellt ist.
